(19) Europäisches Patentamt
European Patent Office
Office européen des brevets

(11) **EP 3 455 534 B1**

(12) **EUROPEAN PATENT SPECIFICATION**

(45) Date of publication and mention of the grant of the patent:
**26.10.2022 Bulletin 2022/43**

(21) Application number: **17723086.9**

(22) Date of filing: **11.05.2017**

(51) International Patent Classification (IPC):
**F16L 37/092** (2006.01)      **F16L 37/088** (2006.01)
**F16K 3/02** (2006.01)

(52) Cooperative Patent Classification (CPC):
**F16L 37/0925; F16L 37/088**

(86) International application number:
**PCT/EP2017/061370**

(87) International publication number:
**WO 2017/194691 (16.11.2017 Gazette 2017/46)**

(54) **SLEEVE, APPARATUS AND METHOD FOR RESTRICTING A MOVEMENT OF A PIPE**

MUFFE, VORRICHTUNG UND VERFAHREN ZUR BEGRENZUNG EINER BEWEGUNG EINES ROHRES

MANCHON, APPAREIL ET PROCÉDÉ POUR LIMITER LE MOUVEMENT D'UN TUYAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2016 NL 2016757**

(43) Date of publication of application:
**20.03.2019 Bulletin 2019/12**

(73) Proprietor: **J. van Beugen Beheer B.V.**
**3223 HJ Hellevoetsluis (NL)**

(72) Inventors:
• **VAN BEUGEN, Leonard**
**3267 BN Goudswaard (NL)**
• **ASSENBERG, Abraham**
**3131 NG Vlaardingen (NL)**

(74) Representative: **Hoyng Rokh Monegier B.V.**
**Rembrandt Tower, 30th Floor**
**Amstelplein 1**
**1096 HA Amsterdam (NL)**

(56) References cited:
DE-U- 7 036 283        GB-A- 2 103 744
US-A- 3 815 940        US-A- 4 068 866
US-A1- 2010 001 519    US-B1- 6 997 041

**Description**

**TECHNICAL FIELD**

The invention relates to a sleeve, an apparatus and a method for tightening a pipe. The present invention is particularly suitable for use in a coupling system for connecting a plurality of pipes. The coupling system may be further arranged to block a flow of fluid (in particular liquid) between pipes. In this way the replacement of pipes can be made easier.

**BACKGROUND ART**

Water pipes in a pipeline network, such as water supply or underground pipes, are connected to one another using coupling systems. In order to reduce a risk that the pipes are disconnected from the coupling system (e.g. due to bending, pressures in the pipes, shearing forces applied on the pipe, etc), some coupling systems in the prior art use a metal restrain ring to secure the pipe.

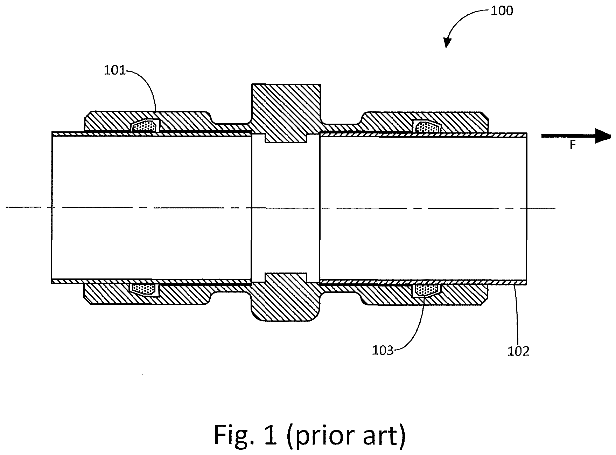

Fig. 1 shows one such system in the prior art. The coupling system 100 has a sleeve 101, which has a recess to accommodate the metal restrain ring 103. The sidewall of the recess has a slope. When a pull force F is applied to the pipe 102, the restrain ring 103 initially moves together with the pipe until the restrain ring hits the sidewall of the recess. The slope of the sidewall will then reduce the size of the restrain ring, so that the restrain ring grips the pipe and stops the movement.

Such a system in the prior art has a hidden problem, which is found by the inventors of the present invention. The problem occurs when the system is installed, in particular when the retrain ring is brought into the sleeve. As the sleeve is designed to accommodate the pipe, the inner surface of the sleeve forms a smaller tunnel than the outer size of the restrain ring. As such, in order to arrive at the recess, the restrain ring needs to be bent with a considerable force to pass through the opening of the sleeve. This installation is not always perfect, and in some cases can cause deformation or even damage to the restrain ring. As a result, the clamping ring may be off-centered and its performance will be reduced, or the system and the pipe can be severely damaged.

The problem is particularly serious if the sleeve is self-mounting, i.e. the opening of the sleeve for receiving and mounting on the pipe does not form two parts that are to be connected together using a mounting element and/or the sleeve comprises an integrally formed hollow cylinder or prism for receiving the pipe. In this case, after the pipe is inserted into the pipe, it will be difficult to correct the improper installation of the retrain ring because there is no way to disassemble the sleeve.

Even if the sleeve is formed by two parts and technically can be disassembled, it is still not ideal to disassemble the sleeve after the problem occurs. When the pipe is to be replaced at one end of the coupling system, while another pipe remains connected and coupled to the coupling system, disassembling the entire coupling system is not desired.

US 3,815,940 discusses a joint which can be used for both plastic and metal pipes. The joint comprises a hollow body member having a spring-like split gripper ring. A first pipe is coupled to the joint by means of a threaded coupling. A second pipe is received in the hollow body. Prior to receiving the second pipe, the gripper ring is inserted in the joint through a narrow passageway. US 4,068,866 relates to a similar joint.

GB 2,103,704 discusses a connector for pipes which primarily consists of two threadedly engaged parts, namely a clamping nut and a threaded pipe. A clamping ring is disposed within the clamping nut.

US 2010/001519 is directed to a pipe fitting for quickly and fluid tightly coupling two sections of a pipe. Upon installation, the fitting uses a ring module which must be pushed through a narrow passage for placing the ring module in a recess.

**SUMMARY OF INVENTION**

It is therefore an objective to provide a sleeve, an apparatus and a method for tightening a pipe, using a clamping element, with a lower risk of deformation or damage to the clamping element during the installation.

A first aspect of the invention concerns an apparatus for tightening a pipe, as defined in claim 2.

The apparatus comprises a sleeve as defined in claim 1, comprising an (inner) surface which defines an elongated hollow and an opening of the hollow. The hollow is an empty space to allow a passage of a portion of a pipe and/or accommodating a portion of the pipe.

The metal clamping element and the sleeve are arranged to restrict a movement of the pipe. A portion of the clamping element is arranged in a recess of the surface of the sleeve, which defines a non-constant cross-section area along the elongated hollow, such that the clamping element generates a gripping force on the pipe when the pipe moves toward the opening. For example, the nonconstant cross-section can be arranged to reduce a size of the clamping element when the pipe moves toward the opening, so that the reduced clamping element grips on the sidewall of the pipe.

The objective of the invention is achieved by making an extended portion to a recess which accommodates the clamping element. The extended portion extends to a position on the (inner) surface of the sleeve less than 5 mm from the opening of the coupling system. Preferably the extended portion extends all the way to the opening.

In this way, the metal clamping element no longer needs to pass through a long, narrow tunnel to arrive at the recess. As the recess extends toward the opening, a cross-section area of the elongated hollow can be made larger than the designed cross-section area for the pipe. For example, the inner radius of the sleeve can be made larger due to the extended portion of the recess. When bringing the clamping element to the position along the extended portion, the size of the clamping element no longer needs to be significantly reduced. The risk of deformation/damage/off-center can therefore be reduced.

The recess may further comprises an operation portion for accommodating the clamping element, and a sloped portion defining a transition between the operation portion and the extended portion. The inner surface of the sleeve defines a first cross-section area for accommodating the pipe, a second cross-section area in the extended portion, allowing the clamping element to be moved into the operation portion, and a third cross-section area, e.g. at the boundary of the operation portion and the sloped portion, for accommodating the clamping element. The first cross-section area is made smaller than the second cross-section, and the second cross-section area is made smaller than the third cross-section. In this way, when the clamping element moves along with the pipe toward the opening at or close to the boundary, the sidewall of the sleeve will reduce the size of the clamping element such that the clamping element grips onto the pipe.

In a preferred embodiment, the sleeve is self-mounting. For example, the hollow may be defined by an integrally formed socket (formed of one piece of material) which is suitable for receiving the pipe, wherein at least a portion of the socket has a cross-section area substantially matching the cross-section area of the pipe. Once the pipe is inserted into the socket, the pipe tightly fits against at least a portion of the sidewall of the socket. In this way, i.e. a mounting element (e.g. bolts) is not needed to mount the sleeve onto the pipe.

In another embodiment, the hollow may be formed by two or more parts (e.g. a first half and a second half) of the sleeve. In this embodiment, the apparatus further comprises a mounting element for mounting these parts of the sleeve onto the pipe. The mounting element may be integrated as a part of the sleeve.

The second aspect of the invention concerns a method for installing a coupling system as defined in claim 15.

The method comprises:

- arranging a clamping element in an elongated hollow defined by a sleeve,
- inserting a pipe into the elongated hollow through an opening and the clamping element,
- wherein the sleeve and the clamping element are arranged to generate a gripping force on the pipe when the pipe moves toward the opening,
- wherein the clamping element is arranged in a recess of the sleeve, the recess provided with an extended portion, extending to a position less than 5mm from the opening,

wherein the hollow defines a first cross-section area, and the extended portion of the recess defines a second cross-section area at the opening, wherein the first cross-section area is smaller than the second cross-section area.

The third aspect of the invention concerns a sleeve as defined in claim 1 for use in the apparatus of claim 2.

The sleeve comprises an (inner) surface which defines an elongated hollow and an opening of the hollow, to allow a passage of a portion of a pipe and/or accommodating a portion of the pipe. The sleeve comprises a recess for accommodating a clamping element for restricting a movement of the pipe. The recess comprises an extended portion to a position on the surface less than 5 mm from the opening.

The first, second, and third aspects of the invention may further comprise the following preferred features.

The clamping element forms a C-shaped ring, for example having a cross-section of an incomplete circle. This makes the ring more flexible and can reduce the risk of deformation.

The surface of the clamping element may comprise a first portion and a second portion, wherein a tangent line of the first portion and a tangent line of the second portion define a non-zero angle toward the opening. For example, the surface of the clamping element may comprise a first face and a second face, the first face and the second face forming a wedge. The wedge represents a thickness of the clamping element, which is larger than a gap defined by the second cross-section area (suitable for inserting the clamping element) and the first cross-section area (suitable for accommodating the pipe). This ensures that, along the movement of the pipe, the clamping element will be stuck at some point and grip the pipe to stop the movement.

In this way, the sleeve can become self-blocking: the movement of the pipe toward the opening is blocked once the pipe is inserted. When there is a pull force to pull the pipe out, the sloped portion of the recess engages with the sloped surface of the C-shaped clamping element and generates a gripping force on the pipe. Consequently, the pipe is stuck together with the clamping element and cannot be pulled out. In this way, no screw, bolt or alike is needed to prevent the pipe from being pulled out.

The second portion (e.g. second face) may comprise a plurality of teeth. This is particularly advantageous when the pipe is made of plastic. In this way, when gripping onto the pipe, the teeth can stick into the sidewall of the pipe.

In a preferred embodiment, there is a confinement element, arranged to fill a gap defined by the first cross-section area and the second cross-section area. In other words, the confinement is designed to fill the gap between the extended portion of the recess and the pipe. A trade-off of having an enlarged second cross-section area around the opening of the sleeve is a risk that contamination might enters the sleeve. This might decrease the performance of the clamping element. By arranging the confinement element between the pipe and the sleeve, this risk can be largely reduced. The extended portion of the recess may have a shape for fastening the confinement element, for example having a non-constant cross-section area for preventing the confinement element from moving toward and/or away from the opening.

The confinement element may be provided with a seal element. An advantage of such a seal element is that the risk of contamination in the sleeve is further reduced. Preferably, the seal element physically forms a separate part from the confinement element. However, the seal element may also be integrally formed with the rest of the confinement element.

In some embodiments, a centering element made of elastic material is provided, such as soft plastic, arranged between a sidewall of the recess and the clamping element. The centering element is preferably arranged in the recess before the clamping element is arranged. When bringing the clamping element into the recess, it can be checked whether the clamping element matches the surface of the centering element. This allows a more precise control of whether the clamping element is off-centered.

One application of the invention is for use in a coupling system for connecting a plurality of pipes. For example two, three or four pipes can be connected. Preferably, the coupling system comprises two sleeves, for connecting two pipes, or three sleeves for branching

In a further preferred embodiment, the coupling system comprises means for blocking a flow of fluid between the pipes. For example, the sleeve may be arranged to guide a blocking plate on a guide plane intersected with the elongated hollow, for allowing the blocking plate to enter or create a gap between the plurality of pipes.

In a preferred embodiment, the middle chamber is arranged between two openings at an asymmetrical position. This allows one side of the sleeve to have an additional length to engage with another device, such as an endcap configured to flush the pipe. For example, the sleeve may comprise a first opening for receiving a first pipe, and may further comprise a second opening for receiving a second pipe. The first opening is arranged at a first side of the guide plane, and the second opening is arranged at a second side of the guide plane. The distance from the first opening to the guide plane is different from The distance from the second opening to the guide plane.

## BRIEF DESCRIPTION OF DRAWINGS

Embodiments will now be described, by way of example only, with reference to the accompanying schematic drawings in which corresponding reference symbols indicate corresponding parts, and in which:

Fig.1 shows a coupling system in the prior art.
Figs.2A and 2B show some embodiments of the invention, wherein the sleeve comprises a recess having an extended portion.
Figs.3A and 3B show another embodiment of the invention, wherein the extended portion extends all the way to the opening of the sleeve.
Fig. 3C shows an embodiment similar to the embodiments of the invention.
Fig.4 shows an embodiment of the clamping element suitable for use in the invention.
Fig.5 show another embodiment of the invention, which uses a blocking plate for temporarily blocking a flow of fluid between a plurality of pipes.
Fig. 6 shows a side cross-section view of the embodiment of Fig. 5.
Fig. 7 shows a perspective view of the embodiment of Figs. 5 and 6.

The figures are meant for illustrative purposes only, and do not serve as restriction of the scope or the protection as laid down by the claims.

## DESCRIPTION OF EMBODIMENTS

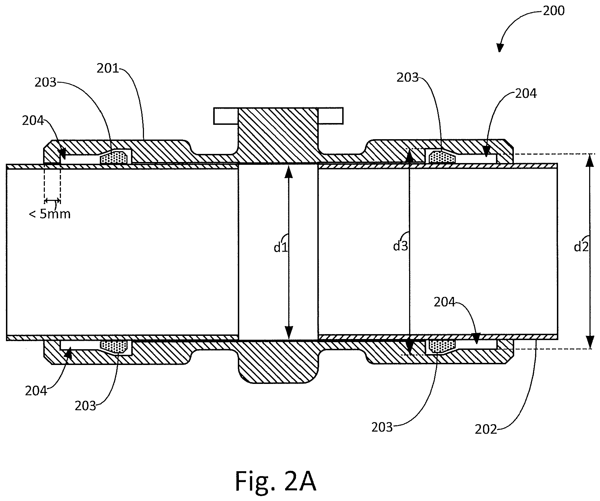

Fig. 2A shows a cross-section view of an embodiment of the invention. The apparatus 200 comprises a sleeve 201 having a recess with an extended portion 204, and a clamping element 203 for gripping a pipe 202.

A portion of the clamping element 203 is arranged in the recess. In the embodiment shown, the clamping element 203 defines a decreasing slope toward an opening of the sleeve 201. The sidewall of the recess has a sloped portion having a corresponding slope. The thickness of the clamping element 203 is such that a surface of the clamping element 203 will attach to the sidewall of the recess, when the damping element 203 slightly moves together with the pipe 202 toward the opening of the sleeve 201. This will generate a gripping force so that the clamping element 203 grips tightly on the pipe 202, so the clamping element 203 and the pipe 202 are stuck together on the sidewall of the sleeve 201.

The extended region 204 extends to a position less than 5mm from the opening of the sleeve. In this way, it becomes easier to put the clamping element 203 into the sleeve 201. The size of the clamping element 203 only needs to be reduced to pass a relatively short distance of less than 5mm. consequently, the risk of damage/deformation can be reduced. Preferably, this distance is zero, i.e. the extended portion 204 extends all the way to the opening of the sleeve 201. This can reduce the risk of damage / deformation to a minimum.

The extended region 204 preferably extends in a direction substantially parallel to a direction for inserting the pipe 202, along a distance longer than 5mm, as shown in Fig. 2A. In this way, the clamping element 203 can be placed into position with ease, as it does not need to change its shape when being moved from the begin of the extended portion to the sloped portion.

The sleeve 201 defines a first cross-section area for accommodating the pipe 202, a second cross-section area for inserting the clamping element 203, and a third cross-section for accommodating the clamping element 203. The first cross-section area is smaller than the second cross-section area, which is in turn smaller than the third cross-section area. In the embodiment shown, the pipe has a substantially cylindrical shape, so the first, second, and third cross-section areas are represented by diameters d1, d2 and d3 respectively.

Preferably, the sleeve 201 is self-mounting. Preferably, the first cross-section area and the (transverse) cross-section area of the pipe 202 substantially match. For example, the difference between d1 and the diameter of the pipe 202 is preferably less than 3mm, more preferably less than 2.2mm. In this way, once the pipe 202 is inserted, the sidewall of the pipe 202 can tightly fit against the sidewall of the hollow of the sleeve 201, so that the sleeve 201 can be mounted onto the pipe 202 without relying on any mounting element such as bolts.

Preferably, The second cross-section area minus the first cross-section area is at least 12cm$^2$. According to the invention, d2 minus d1 is at least 7mm, more preferably at least 9mm. Subject to the thickness of the sleeve, this difference is preferably large. In this way, when bringing the clamping element 203 to the position along the extended portion 204, the size of the clamping element no longer needs to be significantly reduced. The risk of deformation/damage/off-center can therefore be reduced.

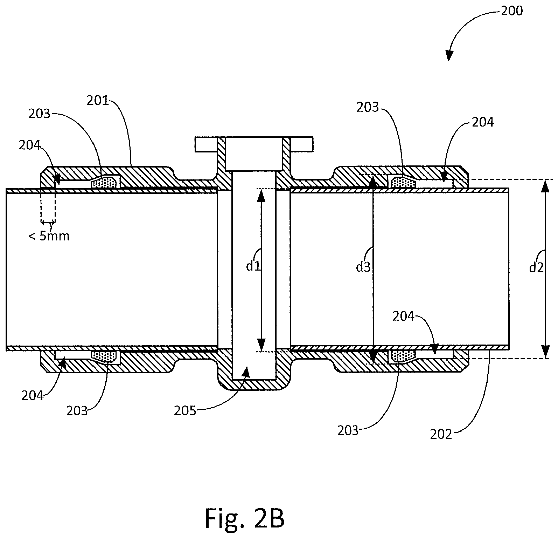

Preferably, as shown in Fig. 2, the sloped region of the recess defines a transition from the third cross-section area to the second cross-section area, then the extended portion starts. Preferably, the third cross-section area minus the second cross-section is at least 9cm$^2$. For example, d3 minus d2 may be at least 5mm, more preferably at least 6mm. Because this difference corresponds to the height of the sloped portion, subject to the thickness of the sleeve, a larger difference will allow the clamping element 203 to have a corresponding sloped portion which has a sufficient thickness to reduce the risk that the clamping element 203 slips out from the sleeve 201 when a pulling force is asserted. The extended portion 204 preferably comprises a smooth portion. This allows an easier installation of the clamping element 203, because this can allow the clamping element 203 to be moved into the recess more easily..

In this embodiment, the sleeve 201 is particularly suitable for a pipe 202 having a diameter of 110mm, or more generally between 100mm and 120mm, but may also be used with other sizes of pipes, for example having a diameter between 50mm and 500mm, in particular between 80mm and 315mm. For pipes having a diameter different from 110mm, the dimensions described above (e.g. cross-section areas, diameters, etc) may optionally be scaled proportionally and/or shifted with a constant. Using the mathematical expression, the scaling of the diameter as described above follows the formula below if the diameter of the pipe is at least 110mm:

$$d_2 - d_1 \geq 7\text{mm} \times \left( \frac{Pipe\_diameter(\text{mm})}{110\text{mm}} \right),$$

where d1 is a diameter defined by the first cross-section area, d2 is a diameter defined by the second cross-section area, and Pipe_diameter is the diameter of the pipe 202. Other options (e.g. scaling of the cross-section area, shifting, etc) may be expressed using similar expressions.

As shown in Fig. 2A, the sleeve 201 is preferably arranged to couple a plurality of pipes 202. In this case the apparatus 200 comprises a plurality of clamping elements 203, accommodated in a plurality of recesses 204 of the sleeve 201. In the figure, two recesses are shown. In case three recesses are coupled to each other, a convenient branching equipment is provided.

Fig. 2B shows an embodiment, wherein the sleeve 201 further comprises a middle chamber, arranged between the plurality of pipes 202. This embodiment may comprise elements described above under Fig. 2A.

In the embodiment shown in Fig. 2B, the middle chamber comprises a slit 205 for receiving a block plate for temporarily blocking a flow of fluid (in particular liquid) between the plurality of pipes 202. This will be explained in further detail below.

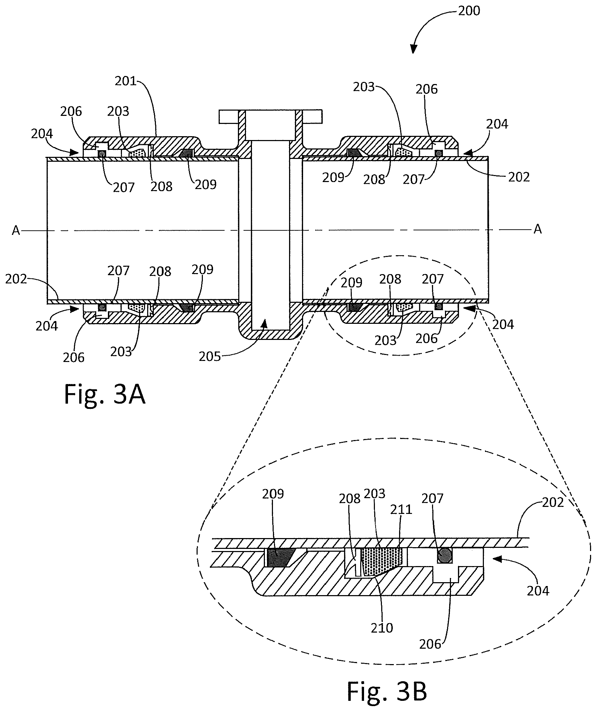

Fig. 3A shows another embodiment of the invention, in which the extended portion 204 of the recess extends to the opening of the sleeve 201 (i.e. the distance between the extended portion and the opening is zero). Fig. 3B shows a zoomed portion of the embodiment of Fig. 3A.

As shown in Figs. 3A and 3B, the apparatus 200 may further comprise a confinement element 206, arranged to fill a gap between the extended portion of the recess and the pipe 202. The confinement element 206 may be made of plastic, such as PVC. The sidewall of the extended portion 204 and the confinement element 206 may comprise shapes adapted to restrict a movement of the confinement element 206 along an axis AA of the elongated space. In the embodiment shown, the confinement element 206 has a protrusion, and the extended portion 204 of the recess comprises a slit. The protrusion is adapted to fit into the slit, so that the confinement element 206 can be fixed at a position.

The confinement element 206 may be provided with a seal element 207. The seal element 207 may be arranged to prevent contamination from entering the sleeve 201. The seal element 207 may be made of rubber or any other elastic material. The seal element 207 may be integrally formed together with the confinement element 206, but preferably physically forms separate parts. In the embodiment shown, the confinement element 206 has a portion arranged to accommodate the seal element 207.

The confinement element 206 and the seal element 207 are mounted after the clamping element 203 is placed. In this way, when installing the clamping element 203, it goes through an enlarged opening so that the clamping element 203 is not damaged. After the installing of the clamping element, the confinement element 206 and the seal element 207 are installed. Consequently, after inserting the pipe 202, contamination can no longer reach the clamping element.

As shown in Figs. 3A and 3B, the apparatus 200 may further comprise a centering element 208. The centering element 208 may be made of non-rigid material, such as resilient plastic or a metal spring. The centering element 208 is preferably arranged between the clamping element 203 and a sidewall of the recess.

The centering element 208 may comprise a first surface, arranged to surround the pipe 202, and a support (e.g. a let), adapted to attach against the sidewall of the recess, and a second surface, substantially perpendicular to the first surface, arranged to face the opening of the sleeve 201.

In this way, during the insertion of the pipe 202, the centering element 208 asserts a restore force against the clamping element 203. The risk of off-centering can thus be reduced. This can further reduce the risk of deformation/damage of the clamping element 203. After the insertion of the pipe, the centering element 208 pushes back the clamping element 203, so that a sloped surface 211 of the clamping element substantially attaches a sloped portion 210 of the recess, as shown in Fig. 3B, or so that the sloped surface 211 and the sloped portion 210 have a distance less than 3mm.

As shown in Figs. 3A and 3B, the apparatus 200 may further comprise a second seal element 209, for further improve the seal of the sleeve 201.

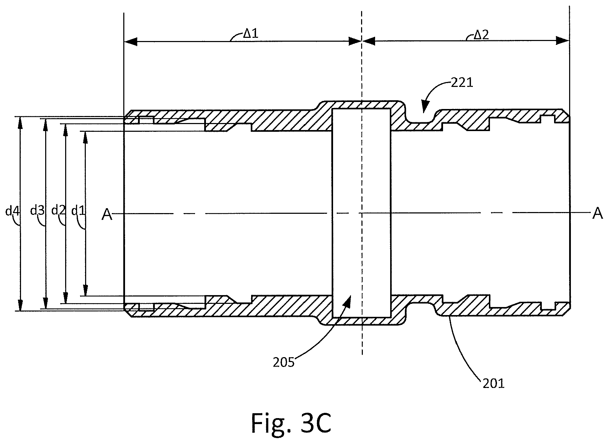

Just like in Figs. 2A and 2B, the embodiments of Figs. 3A and 3B define a first cross-section area, a second cross-section area and a third cross-section area, which correspond to diameters d1, d2 and d3 respectively. These cross-section areas have features as described above under Figs. 2A and 2B. An embodiment is shown in Fig. 3C.

Fig. 3C shows an embodiment which defines diameters d1, d2 and d3 in a similar way as Figs. 2A and 2B. In this embodiment, the sleeve 201 further defines a fourth cross-section area, e.g. corresponding to a diameter d4, adapted to place the confinement element 206.

Although Fig. 3C shows that d4 is larger than d3, this is not required. Preferably, however, the difference between d4 and d2 (i.e. d4-d2) is at least 5mm, more preferably at least 7mm. This allows the sleeve 201 to form a groove which is suitable for fixing the confinement element 206.

In the embodiment shown in Fig. 3C, The middle chamber 205 divides the sleeve 201 into two or more sides, including a first side and a second side. The first side defines a first distance $\Delta 1$ from a center plane of the middle chamber 205 (e.g. a guide plane for a blocking plate, see below) to a first opening, and the second side defines a second distance $\Delta 2$ from the center plane to a second opening. Preferably, the first distance has at least 160mm. This allows the first side of the sleeve 201 to have an additional length to engage with an additional device, such as an endcap. The additional device may comprise one or more valves, arranged to flush the fluid in the sleeve 201 and pipe 202 and/or arranged to drain the fluid in the sleeve 201 and pipe 202. The additional device may be arranged to fit against an outer surface of the sleeve 201 to engage with the latter.

The second distance $\Delta 2$ does not have to be the same as the first distance $\Delta 1$, as it is sufficient that the sleeve 201 can engage with the additional device on one side. Preferably, the second distance $\Delta 2$ is shorter. For example, the middle chamber 205 may be arranged between two openings at an asymmetrical position. The first distance $\Delta 1$ may be at least 18mm more than the second distance $\Delta 2$. In the embodiment shown, the second side is adapted to receive a pipe only, and the outer surface has a recess 221 as in Figs. 2A, 2B, 3A and 3B; the first side is adapted to not only receive a pipe but also engage with the additional device, and does not have the same recess 221. This allows a better engagement with the additional device on the outer surface of the sleeve 201.

Although Fig. 3C shows a similar sleeve 201 as the embodiment of Figs. 3A and 3B, feature related to the first distance $\Delta 1$ and the second distance $\Delta 2$ does not depend on the presence of the confinement element 206 and the centering element 208, and may also be applied in other embodiments such as Figs. 2A and 2B.

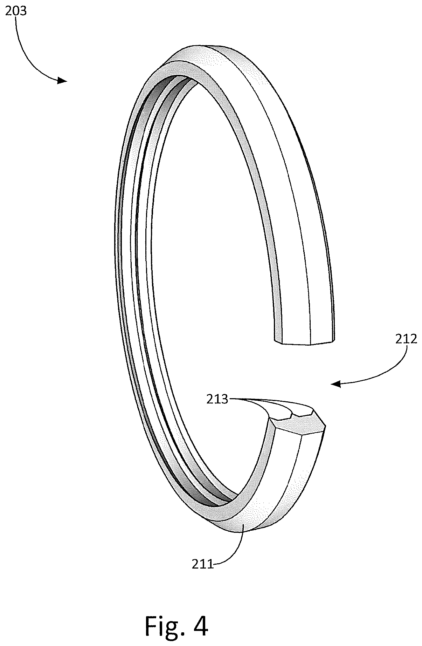

Fig. 4 shows an embodiment of the clamping element 203, which is suitable for use in the embodiments of the apparatus 200 in Figs. 2 and 3.

The clamping element 203 forms a C-shaped ring, having a slit 212. The slit 212 will increase the flexibility of the clamping element 203. This will improve the integrity of the clamping element 203.

As shown in Fig. 4, the clamping element 203 comprises a sloped surface 211. As described above, such a sloped surface 211 can work together with the sloped portion 210 of the recess in the sleeve 201 for generating a gripping force on the pipe 202.

As shown in Fig. 4, the clamping element 203 may further comprise one or more teeth 213. These teeth 213 are arranged to grip into a sidewall of the (plastic) pipe when the gripping force is generated. In this way, the clamping of the pipe 201 can be further improved.

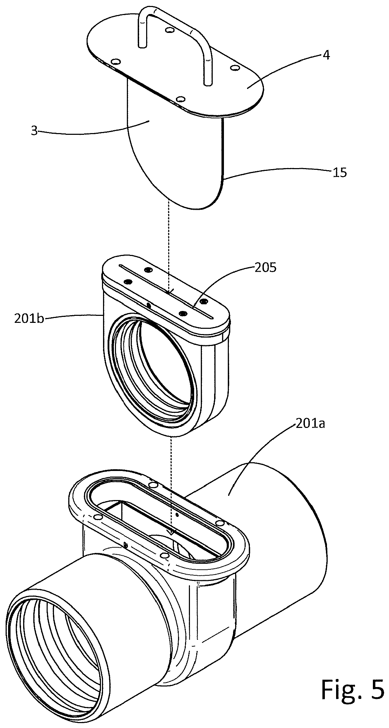

Fig. 5 shows a perspective view of an embodiment of the invention, which shows a blocking plate 3. This embodiment may comprise elements described above under Figs. 2-4.

The blocking plate 3 is arranged to temporarily block a flow of fluid between a plurality of pipes 202. When this flow is blocked, a pipe 202 at one side of the sleeve 201 can be (1) added or (2) removed and replaced by a new one, while another pipe 202 at another side of the sleeve 201 can remain at the place without a problem of leaking.

The sleeve 201 may have a integrally formed socket by one piece having a general circular cross section. The cross section is adapted to substantially match the cross section of the pipe 202 onto which the sleeve is to be mounted. The pipe 202 is received in the sleeve 201.

The blocking plate 3 may comprise an edge 15 at an underside having a shape corresponding to the shape of the pipeline, e.g. a generally circular form. The blocking plate 3 preferably comprises at the top side a plate or strip 4, which functions as a stop when the blocking plate 3 is guided into the sleeve 201.

In the embodiment shown, the middle chamber is formed by a separate middle chamber module 201b, adapted to be inserted to a main body module 201a. In other embodiments, these two modules may also be integrally formed with each other.

The sleeve 201 preferably comprises a slit 205 for guiding the blocking plate 3. The blocking plate 3 can be guided through said slit 205. This will allow the blocking plate 3 to enter the sleeve 201. At a top side of the slit 205, a third sealing element can be applied. The third sealing element can comprise rubber. The seal can comprise two elongate rubber strips placed along side in the longitudinal direction having a relatively small space in between. The sealing element will seal off internal space from outside preventing escape of gases or fluids from inside the sleeve out of the guide 5. The seal will engage on the surface of the blocking element 3.

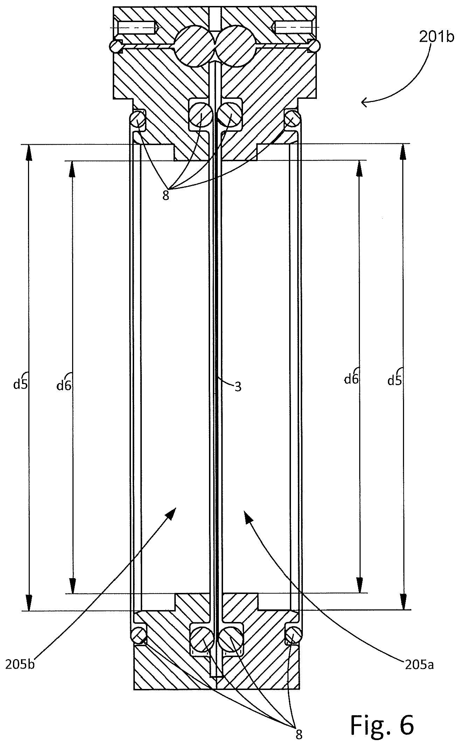

Fig. 6 shows a cross-section view of a portion of an embodiment of the sleeve 201, which may be the middle chamber module 201bof Fig. 5. In this embodiment, the slit 205 is separated by the blocking plate 3 into a first space 205a and a second space 205b. The flow of fluid between a first pipe 202a and a second pipe 202b is blocked by the blocking plate 3, e.g. such that water cannot flow between the first space 205a and the second space 205b.

The embodiment shown in Fig. 6 may comprise elements described above under Fig. 5. The sleeve 201 may further comprise one or more fourth seal elements 8, which is arranged to attach to the blocking plate 3, to provide a good blocking function between the first space and the second space.

The middle chamber may define a fifth cross-section area and a sixth cross-section area. The fifth cross-section area is preferably substantially the same as the first cross-section area for fitting the pipe. The sixth cross-section area is preferably smaller than the cross-section of the pipe. In the embodiment shown, the fifth cross-section area is represented by a diameter d5, and the sixth cross-section area is represented by a diameter d6.

When inserting the pipe, it enters the middle chamber and stops when reaching a jump between the fifth and sixth cross-section areas. In this way, the pipe can be kept inside the middle chamber.

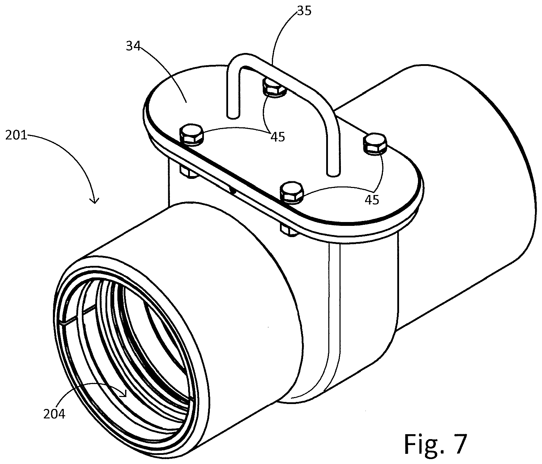

Fig. 7 shows a perspective view of an embodiment of the sleeve 201. In the embodiment shown in Fig. 7, the sleeve 201 is provided with a cap plate 34. The cap plate may be provided with or without the blocking element 3 as described under Fig. 5. For example, when the flow of fluid between pipes needs to be blocked, the blocking plate 3 may be mounted to the sleeve. In this case the cap plate 34 may correspond to the top side of a plate or strip 4 as described under Figs. 5 and 6. On the other hand, when the flow does not need to be blocked, the blocking plate 3 may be removed and replaced by a lid without any blocking function. The cap plate 34 may comprise a plurality of fixation elements 45 (e.g. bolts) for fixing the blocking element 3 in the slot 205. On the upper surface of the cap plate 4 a handle 35 is shown. This handle 35 can be used for guiding the blocking element 3 into the slit 205.

After performing maintenance works, which included temporarily closing of the gap between the pipes 202, the blocking element 3 can be withdrawn from its guide 205 and the top side of the guide 205 can be closed with use of the strip. This will allow reusing the conduction between the pipes 202, e.g. for transport for water or gas.

The descriptions above are intended to be illustrative, not limiting. It will be apparent to the person skilled in the art that alternative and equivalent embodiments of the invention can be conceived and reduced to practice, without departing from the scope of the claims set out below.

**Claims**

1. A sleeve (201) for mounting onto a pipe (202), comprising:

    - a surface which defines an elongated hollow for accommodating a pipe (202), and an opening of the hollow;
    - a recess of the surface of the sleeve for accommodating a C-shaped metal clamping element (203), wherein the recess comprises a sloped portion (210), and further comprises an extended portion (204), extending from the sloped portion (210) to a position less than 5mm from the opening, wherein the hollow defines a first cross-section area for accommodating the pipe (202) such that the sidewall of the pipe (202) can tightly fit against the sidewall of the hollow,, and the extended portion of the recess defines a second cross-section area, and the sloped portion (210) defines a third cross-section area, wherein the third cross-section area is larger than the second cross-section area, and wherein the first cross-section area is smaller than the second cross-section area, **characterized in that** the first cross-section area defines a first diameter d1, and the second cross-section area defines a second diameter d2, and wherein d2 minus d1 is at least 7mm, such that the size of the clamping element (203) is not significantly reduced when bringing the clamping element (203) to the recess along the extended portion (204).

2. An apparatus for connecting a pipe end, the apparatus comprising

    - a sleeve (201) according to claim 1; and
    - a C-shaped metal clamping element (203), comprising a sloped surface (211), wherein a portion of the clamping element is arranged in the recess of the surface of the sleeve (201), allowing the sloped portion (210) of the recess and the sloped surface (211) of the clamping element (203) to engage with each other to generate a gripping force on the pipe (202) when the pipe moves toward the opening.

3. The apparatus of claim 2, wherein the sleeve and the C-shaped metal clamping element are arranged to block a movement of the pipe toward the opening without requiring screws or bolts.

4. The apparatus of any of claims 2-3, further comprising a confinement element (206), arranged to fill a gap between the extended portion (204) of the recess and the pipe (202), wherein preferably the confinement element (206) is provided with a first sealing element (207).

5. The apparatus of any of claims 2-4, further comprising a centering element (208), arranged between a sidewall of the recess and the clamping element (203).

6. The apparatus of any of claims 2-5, wherein the clamping element (203) comprises a plurality of teeth, adapted to grip into a sidewall of the pipe (202) when the gripping force is generated.

7. The apparatus of any of claims 2-6, wherein two or more sleeves (201) are arranged to couple a plurality of pipes (202), preferably 2, 3 or 4 pipes (202).

8. The apparatus of claim 7, wherein two or more sleeves (201) are arranged to couple two pipes (202).

9. The apparatus according to any one of claims 7-8, wherein the apparatus further comprises a middle chamber, arranged to receive a blocking plate (3) for temporarily block a flow of fluid between the plurality of pipes.

10. The apparatus of claim 9, wherein the sleeve is arranged to guide the blocking plate on a guide plane intersected with the elongated hollow, for allowing the blocking plate to enter or a gap between the plurality of pipes.

11. The apparatus according to claim 10, wherein the opening is a first opening at a first side of the guide plane, and the sleeve further comprise a second opening at a second side of the guide plane, for receiving a second pipe, wherein the middle chamber is arranged at an asymmetrical position between the first opening and the second opening.

12. The apparatus according to any of claims 2-11, wherein the first cross-section area defines a first diameter d1, and the second cross-section area defines a second diameter d2, wherein the first and second diameters comply with the following formula:

$$d_2 - d_1 \geq 7\text{mm} \times \left( \frac{Pipe\_diameter(\text{mm})}{110\text{mm}} \right),$$

wherein the Pipe diameter is the diameter of the pipe (202) and is at least 110 mm.

13. The apparatus according to any of claims 2-11, wherein second the cross-section area minus the first cross-section area is at least 12cm$^2$.

14. The apparatus according to any claims 2-13, wherein the extended region (204) extends in a direction substantially parallel to a direction for inserting the pipe (202) along a distance longer than 5mm.

15. A method for fastening a pipe (202), the method comprising:

- arranging a C-shaped metal clamping element (203) in an elongated hollow defined by a sleeve (201); and
- inserting a pipe (202) into the elongated hollow through an opening and the clamping element, wherein a portion of the clamping element is arranged in a recess of the surface of the sleeve (201), wherein the recess comprises a sloped portion (210), and further comprises an extended portion (204) extending from the sloped portion to a position less than 5mm from the opening, wherein the hollow defines a first cross-section area for accommodating the pipe (202) such that the sidewall of the pipe (202) can tightly fit against the sidewall of the hollow, and the extended portion of the recess defines a second cross-section area, and the sloped portion (210) defines a third cross-section area, wherein the third cross-section area is larger than the second cross-section area, allowing the sloped portion (210) of the recess and the sloped surface (211) of the clamping element (203) to engage with each other to generate a gripping force on the pipe (202) when the pipe moves toward the opening, and wherein the first cross-section area is smaller than the second cross-section area, **characterized in that** the first cross-section area defines a first diameter d1, and the second cross-section area defines a second diameter d2, and wherein d2 minus d1 is at least 7mm, such that the size of the clamping element (203) is not significantly reduced when bringing the clamping element (203) to the recess along the extended portion (204).

**Patentansprüche**

1. Hülse (201) zum Anbringen an einem Rohr (202), umfassend:

- eine Oberfläche, die einen länglichen Hohlraum zum Aufnehmen eines Rohrs (202) definiert, und eine Öffnung des Hohlraums;
- eine Aussparung der Oberfläche der Hülse zum Aufnehmen eines C-förmigen Metallklemmelements (203), wobei die Aussparung einen geneigten Abschnitt (210) umfasst und ferner einen erstreckten Abschnitt (204) umfasst, der sich aus dem geneigten Abschnitt (210) zu einer Position weniger als 5 mm von der Öffnung entfernt erstreckt, wobei der Hohlraum einen ersten Querschnittsbereich zum Aufnehmen des Rohrs (202) derart definiert, dass die Seitenwand des Rohrs (202) an die Seitenwand des Hohlraums eng anliegen kann, und der erstreckte Abschnitt der Aussparung einen zweiten Querschnittsbereich definiert, und der geneigte Abschnitt (210) einen dritten Querschnittsbereich definiert, wobei der dritte Querschnittsbereich größer als der zweite Querschnittsbereich ist und wobei der erste Querschnittsbereich kleiner als der zweite Querschnittsbereich ist, **dadurch gekennzeichnet, dass** der erste Querschnittsbereich einen ersten Durchmesser d1 definiert und der zweite Querschnittsbereich einen zweiten Durchmesser d2 definiert, und wobei d2 minus d1 mindestens 7 mm beträgt, derart dass die Größe des Klemmelements (203) nicht wesentlich verringert wird, wenn das Klemmelement (203) entlang des erstreckten Abschnitts (204) zu der Aussparung gebracht wird.

2. Vorrichtung zum Verbinden eines Rohrendes, die Vorrichtung umfassend:

- eine Hülse (201) nach Anspruch 1; und
- ein C-förmiges Metallklemmelement (203), umfassend eine geneigte Oberfläche (211), wobei ein Abschnitt des Klemmelements in der Aussparung der Oberfläche der Hülse (201) angeordnet ist, was es dem geneigten Abschnitt (210) der Aussparung und der geneigten Oberfläche (211) des Klemmelements (203) ermöglicht, miteinander in Eingriff zu kommen, um eine Greifkraft auf das Rohr (202) zu erzeugen, wenn sich das Rohr zu der Öffnung hin bewegt.

3. Vorrichtung nach Anspruch 2, wobei die Hülse und das C-förmige Metallklemmelement angeordnet sind, um eine Bewegung des Rohrs zu der Öffnung hin zu blockieren, ohne dass Schrauben oder Bolzen erforderlich sind.

4. Vorrichtung nach einem der Ansprüche 2 bis 3, ferner umfassend ein Begrenzungselement (206), das angeordnet ist, um einen Spalt zwischen dem erstreckten Abschnitt (204) der Aussparung und dem Rohr (202) zu füllen, wobei vorzugsweise das Begrenzungselement (206) mit einem ersten Dichtungselement (207) versehen ist.

5. Vorrichtung nach einem der Ansprüche 2 bis 4, ferner umfassend ein Zentrierelement (208), das zwischen einer Seitenwand der Aussparung und dem Klemmelement (203) angeordnet ist.

6. Vorrichtung nach einem der Ansprüche 2 bis 5, wobei das Klemmelement (203) eine Vielzahl von Zähnen umfasst, die angepasst sind, um in eine Seitenwand des Rohrs (202) zu greifen, wenn die Greifkraft erzeugt wird.

7. Vorrichtung nach einem der Ansprüche 2 bis 6, wobei zwei oder mehr Hülsen (201) angeordnet sind, um eine Vielzahl von Rohren (202), vorzugsweise 2, 3 oder 4 Rohre (202), zu koppeln.

8. Vorrichtung nach Anspruch 7, wobei zwei oder mehr Hülsen (201) angeordnet sind, um zwei Rohre (202) zu koppeln.

9. Vorrichtung nach einem der Ansprüche 7 bis 8, wobei die Vorrichtung ferner eine Mittelkammer umfasst, die angeordnet ist, um eine Sperrplatte (3) zum vorübergehenden Sperren eines Fluidstroms zwischen der Vielzahl von Rohren zu empfangen.

10. Vorrichtung nach Anspruch 9, wobei die Hülse angeordnet ist, um die Sperrplatte auf einer Führungsebene zu führen, die den länglichen Hohlraum schneidet, zum Ermöglichen der Sperrplatte in einen Spalt zwischen der Vielzahl von Rohren einzutreten.

11. Vorrichtung nach Anspruch 10, wobei die Öffnung eine erste Öffnung an einer ersten Seite der Führungsebene ist und die Hülse ferner eine zweite Öffnung an einer zweiten Seite der Führungsebene umfasst, zum Empfangen eines zweiten Rohres, wobei die Mittelkammer an einer asymmetrischen Position zwischen der ersten Öffnung und der zweiten Öffnung angeordnet ist.

12. Vorrichtung nach einem der Ansprüche 2 bis 11, wobei der erste Querschnittsbereich einen ersten Durchmesser d1 definiert und der zweite Querschnittsbereich einen zweiten Durchmesser d2 definiert, wobei der erste und der zweite Durchmesser der folgenden Formel entsprechen:

$$d_2 - d_1 \geq 7\mathrm{mm} \times \left( \frac{Rohrdurchmesser\ (mm)}{110\mathrm{mm}} \right),$$

wobei der Rohrdurchmesser der Durchmesser des Rohrs (202) ist und mindestens 110 mm beträgt.

13. Vorrichtung nach einem der Ansprüche 2 bis 11, wobei der zweite Querschnittsbereich minus dem ersten Querschnittsbereich mindestens 12 cm$^2$ beträgt.

14. Vorrichtung nach einem der Ansprüche 2 bis 13, wobei sich die erstreckte Region (204) in einer Richtung erstreckt, die im Wesentlichen parallel zu einer Richtung zum Einführen des Rohrs (202) entlang einer Distanz von mehr als 5 mm ist.

15. Verfahren zum Befestigen eines Rohrs (202), das Verfahren umfassend:

- Anordnen eines C-förmigen Metallklemmelements (203) in einem länglichen Hohlraum, der durch eine Hülse (201) definiert ist; und
- Einführen eines Rohrs (202) in den länglichen Hohlraum durch eine Öffnung und das Klemmelement, wobei ein Abschnitt des Klemmelements in einer Aussparung der Oberfläche der Hülse (201) angeordnet ist, wobei die Aussparung einen geneigten Abschnitt (210) umfasst und ferner einen erstreckten Abschnitt (204) umfasst, der sich aus dem geneigten Abschnitt zu einer Position weniger als 5 mm von der Öffnung entfernt erstreckt, wobei der Hohlraum einen ersten Querschnittsbereich zum Aufnehmen des Rohrs (202) derart definiert, dass die Seitenwand des Rohrs (202) an die Seitenwand des Hohlraums eng anliegen kann, und der erstreckte Abschnitt der Aussparung einen zweiten Querschnittsbereich definiert, und der geneigte Abschnitt (210) einen dritten Querschnittsbereich definiert, wobei der dritte Querschnittsbereich größer als der zweite Querschnittsbereich ist, was es dem geneigten Abschnitt (210) der Aussparung und der geneigten Oberfläche (211) des Klemmelements (203) ermöglicht, miteinander in Eingriff zu kommen, um eine Greifkraft aus das Rohr (202) zu erzeugen, wenn sich das Rohr zu der Öffnung hin bewegt und wobei der erste Querschnittsbereich kleiner als der zweite Querschnittsbereich ist, **dadurch gekennzeichnet, dass** der erste Querschnittsbereich einen ersten Durchmesser d1 definiert und der zweite Querschnittsbereich einen zweiten Durchmesser d2 definiert, und wobei d2 minus d1 mindestens 7 mm beträgt, derart dass die Größe des Klemmelements (203) nicht wesentlich verringert wird, wenn das Klemmelement (203) entlang des erstreckten Abschnitts (204) zu der Aussparung gebracht wird.

## Revendications

1. Manchon (201) destiné à être monté sur un tuyau (202), comprenant :

    - une surface qui définit un creux allongé pour loger un tuyau (202), et une ouverture du creux ;
    - un évidement de la surface du manchon pour loger un élément de serrage métallique en forme de C (203), l'évidement comprenant une partie inclinée (210), et comprenant en outre une partie étendue (204), s'étendant de la partie inclinée (210) à une position à moins de 5 mm de l'ouverture, dans lequel le creux définit une première zone de section transversale pour loger le tuyau (202) de telle sorte que la paroi latérale du tuyau (202) peut s'ajuster étroitement contre la paroi latérale du creux, et la partie étendue de l'évidement définit une deuxième zone de section transversale, et la partie inclinée (210) définit une troisième zone de section transversale, dans lequel la troisième zone de section transversale est plus grande que la deuxième zone de section transversale, et dans lequel la première zone de section transversale est plus petite que la deuxième zone de section transversale, **caractérisé en ce que** la première zone de section transversale définit un premier diamètre d1, et la deuxième zone de section transversale définit un second diamètre d2, et dans lequel d2 moins d1 est d'au moins 7 mm, de telle sorte que la taille de l'élément de serrage (203) n'est pas significativement réduit lors du rapprochement de l'élément de serrage (203) vers l'évidement le long de la partie allongée (204).

2. Appareil destiné à raccorder une extrémité de tuyau, l'appareil comprenant :

    - un manchon (201) selon la revendication 1 ;
    et
    - un élément de serrage métallique en forme de C (203), comprenant une surface inclinée (211), dans lequel une partie de l'élément de serrage est agencée dans l'évidement de la surface du manchon (201),

    le fait de permettre à la partie inclinée (210) de l'évidement et à la surface inclinée (211) de l'élément de serrage (203) de mettre en prise l'une avec l'autre pour générer une force de saisie sur le tuyau (202) lorsque le tuyau se déplace vers l'ouverture.

3. Appareil selon la revendication 2, dans lequel le manchon et l'élément de serrage métallique en forme de C sont agencés pour bloquer un mouvement du tuyau vers l'ouverture sans nécessiter de vis ou de boulons.

4. Appareil selon l'une quelconque des revendications 2 à 3, comprenant en outre un élément de confinement (206), agencé pour remplir un espace entre la partie étendue (204) de l'évidement et le tuyau (202), dans lequel, de préférence, l'élément de confinement (206) est pourvu d'un premier élément d'étanchéité (207).

5. Appareil selon l'une quelconque des revendications 2 à 4, comprenant en outre un élément de centrage (208), agencé entre une paroi latérale de l'évidement et l'élément de serrage (203).

6. Appareil selon l'une quelconque des revendications 2 à 5, dans lequel l'élément de serrage (203) comprend une pluralité de dents, adaptées pour saisir une paroi latérale du tuyau (202) lorsque la force de saisie est générée.

7. Appareil selon l'une quelconque des revendications 2 à 6, dans lequel deux ou plusieurs manchons (201) sont agencés pour accoupler une pluralité de tuyaux (202), de préférence 2, 3 ou 4 tuyaux (202).

**8.** Appareil selon la revendication 7, dans lequel deux ou plusieurs manchons (201) sont agencés pour accoupler deux tuyaux (202).

**9.** Appareil selon l'une quelconque des revendications 7 à 8, dans lequel l'appareil comprend en outre une chambre médiane, agencée pour recevoir une plaque de blocage (3) pour bloquer temporairement un écoulement de fluide entre la pluralité de tuyaux.

**10.** Appareil selon la revendication 9, dans lequel le manchon est agencé pour guider la plaque de blocage sur un plan de guidage intersecté avec le creux allongé, pour permettre à la plaque de blocage d'entrer dans un espace entre la pluralité de tuyaux.

**11.** Appareil selon la revendication 10, dans lequel l'ouverture est une première ouverture sur un premier côté du plan de guidage, et le manchon comprend en outre une seconde ouverture sur un second côté du plan de guidage, pour recevoir un second tuyau, dans lequel la chambre médiane est agencée dans une position asymétrique entre la première ouverture et la seconde ouverture.

**12.** Appareil selon l'une quelconque des revendications 2 à 11, dans lequel la première zone de section transversale définit un premier diamètre d1, et la deuxième zone de section transversale définit un second diamètre d2, dans lequel les premier et second diamètres sont conformes à la formule suivante :

$$d_2 - d_1 \geq 7\text{mm} \times \left(\frac{Pipe\_diameter\,(mm)}{110\text{mm}}\right),$$

dans lequel Pipe_diameter est le diamètre du tuyau (202) et est d'au moins 110 mm.

**13.** Appareil selon l'une quelconque des revendications 2 à 11, dans lequel la deuxième zone de section transversale moins la première zone de section transversale est d'au moins 12 cm$^2$.

**14.** Appareil selon l'une quelconque des revendications 2 à 13, dans lequel la région étendue (204) s'étend dans une direction sensiblement parallèle à une direction d'insertion du tuyau (202) sur une distance supérieure à 5 mm.

**15.** Procédé de fixation d'un tuyau (202), le procédé comprenant :

- l'agencement d'un élément de serrage métallique en forme de C (203) dans un creux allongé défini par un manchon (201) ; et
- l'insertion d'un tuyau (202) dans le creux allongé à travers une ouverture et l'élément de serrage, une partie de l'élément de serrage étant agencée dans un évidement de la surface du manchon (201), l'évidement comprenant une partie inclinée (210), et comprenant en outre une partie étendue (204) s'étendant de la partie inclinée à une position à moins de 5 mm de l'ouverture, dans lequel le creux définit une première zone de section transversale pour loger le tuyau (202) de telle sorte que la paroi latérale du tuyau (202) peut s'ajuster étroitement contre la paroi latérale du creux, et la partie étendue de l'évidement définit une deuxième zone de section transversale, et la partie inclinée (210) définit une troisième zone de section transversale, dans lequel la troisième zone de section transversale est plus grande que la deuxième zone de section transversale, permettant à la partie inclinée (210) de l'évidement et à la surface inclinée (211) de l'élément de serrage (203) de mettere en prise l'une avec l'autre pour générer une force de saisie sur le tuyau (202) lorsque le tuyau se déplace vers l'ouverture, et dans lequel la première zone de section transversale est plus petite que la deuxième zone de section transversale, **caractérisé en ce que** la première zone de section transversale définit un premier diamètre d1, et la deuxième zone de section transversale définit un second diamètre d2, et dans lequel d2 moins d1 est d'au moins 7 mm, de telle sorte que la taille de l'élément de serrage (203) n'est pas significativement réduite lors du rapprochement de l'élément de serrage (203) vers l'évidement le long de la partie étendue (204).

Fig. 1 (prior art)

Fig. 2A

Fig. 2B

Fig. 3A

Fig. 3B

Fig. 3C

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3815940 A
- US 4068866 A
- GB 2103704 A
- US 2010001519 A